# EUROPEAN PATENT APPLICATION

(11) **EP 4 467 913 A1**
(43) Date of publication of application: **27.11.2024**
(21) Application number: 23769825.3
(22) Date of filing: 15.03.2023
(51) Int. Cl.: F27D 99/00, F16J 15/06, H01B 17/14

(54) **SEALING STRUCTURE AND VACUUM FURNACE**

(30) Priority: 15.03.2022 CN 202220578211 U
(71) Applicant: MEISHAN BOYA ADVANCED MATERIALS CO., LTD., Meishan, Sichuan 620010 (CN)
(72) Inventor: WANG, Yu, Meishan, Sichuan 620010 (CN); GUAN, Weiming, Meishan, Sichuan 620010 (CN); LIANG, Zhenxing, Meishan, Sichuan 620010 (CN)
(74) Representative: Wang, Bo
(86) International application number: PCT/CN2023/081578
(87) International publication number: WO 2023/174323

(57) **Abstract**

A sealing structure and a vacuum furnace. The sealing structure comprises: a baffle (100), a first through hole (110) being formed on the baffle (100), the first through hole (110) passing through a first side surface (101) and a second side surface (102) of the baffle (100); a first structural member (200), an inner hole (20 1) for a member to be sealed (300) to pass through being formed on the first structural member (200), the first structural member (200) being connected to the baffle (100), the inner hole (201) being at least partially located in the first through hole (110), and at least a part of the inner hole (201) being parallel to neither the first side surface (l0l) nor the second side surface (102); and a sealing assembly (400) for sealing a gap between the baffle (100) and the first structural member (200) and sealing a gap between the member to be sealed (300) and the first structural member (200).

## Description

### CROSS-REFERENCE TO RELATED APPLICATIONS

This application claims priority to Chinese Patent Application No. 202220578211.3, filed on March 15, 2022, the contents of which are incorporated herein by reference.

### TECHNICAL FIELD

The present disclosure relates to the field of sealing processes, and in particular, to a sealing structure and a vacuum furnace to which the sealing structure is applied.

### BACKGROUND

In industrial production, there are many scenarios in which components need to be sealed by sealing structures. For example, the coils of a vacuum furnace are located inside a furnace chamber, and the coil head passes outward through the wall of the furnace chamber, the furnace body, and then connects to the power supply. The coil needs to be insulated from the furnace body to avoid short-circuiting, and to maintain the vacuum effect inside the vacuum furnace, the coil needs to be sealed at the point where it passes through the furnace body.

Therefore, how to enhance the sealing effect of the sealing structure is an urgent technical problem in the field.

### SUMMARY

The first aspect of the present disclosure provides a sealing structure, comprising: a baffle plate provided with a first through-hole, the first through-hole extending through a first side surface and a second side surface of the baffle plate; a first structural component provided with an internal hole for a component to be sealed to extend through, the first structural component being connected to the baffle plate, wherein at least a part of the internal hole is located within the first through-hole, and at least the part of the internal hole is not parallel to both the first side surface and the second side surface; and a sealing assembly for sealing a gap between the baffle plate and the first structural component and a gap between the component to be sealed and the first structural component.

In some embodiments, the first structural component extends through the baffle plate via the first through-hole; and the sealing assembly includes a first sealing component for sealing the gap between the component to be sealed and the first structural component, the first sealing component being disposed between an inner wall of the internal hole and the component to be sealed.

In some embodiments, the sealing assembly includes a second sealing component, wherein the second sealing component is located at one end of the first through-hole and abuts against the first side surface or the second side surface of the baffle plate to seal the gap between the baffle plate and the first structural component.

In some embodiments, the sealing assembly further includes a third sealing component for sealing the gap between the baffle plate and the first structural component; and the second sealing component and the third sealing component are located at two ends of the first through-hole, respectively, and the second sealing component and the third sealing component abut against the first side surface and the second side surface of the baffle plate, respectively.

In some embodiments, the sealing assembly includes a fourth sealing component for sealing the gap between the baffle plate and the first structural component, at least a part of the fourth sealing component being disposed between an inner wall of the first through-hole and an outer wall of the first structural component.

In some embodiments, the sealing structure further includes a first limiting structure for limiting a position of the first structural component within the first through-hole.

In some embodiments, the first limiting structure includes a first nut and a first external thread, the first external thread being disposed on the first structural component, the first nut being threadedly connected to the first external thread of the first structural component on a side where the second side surface of the baffle plate is located.

In some embodiments, the sealing structure further includes a second structural component, the second structural component being sleeved on the first structural component and located between the first nut and the third sealing component; the second structural component includes a first main ring portion and a first retaining ring portion, the first main ring portion being sleeved on the first structural component, and the first retaining ring portion being located at one end of the first main ring portion in an axial direction; and both the third sealing component and the first retaining ring portion are located between the baffle plate and the first main ring portion, and the third sealing component is located within an inner ring of the first retaining ring portion.

In some embodiments, the first structural component includes a first main ring portion and a first retaining ring portion; the internal hole is formed on the first main ring portion; the first main ring portion extends through the baffle plate via the first through-hole, the first retaining ring portion is located on a side where the first side surface of the baffle plate is located, and the first retaining ring portion surrounds an outer side of the first main ring portion; and an outer diameter of the first retaining ring portion is larger than a diameter of the first through-hole.

In some embodiments, the first structural component further includes a second retaining ring portion, the second retaining ring portion being located on the side where the first side surface of the baffle plate is located, the second retaining ring portion being disposed on a side of the first retaining ring portion facing the baffle plate, and an outer diameter of the second retaining ring portion being larger than the outer diameter of the first main ring portion.

In some embodiments, a ratio of the outer diameter of the first main ring portion to an inner diameter of the first main ring portion is in a range of 1.1 to 2.

In some embodiments, a ratio of the diameter of the first through-hole to an inner diameter of the first main ring portion is in a range of 1.2 to 2.5.

In some embodiments, the sealing structure further includes a second limiting structure configured to limit a position of the first sealing component within the internal hole.

In some embodiments, the second limiting structure includes a second nut and a first internal thread, the first internal thread located within the internal hole, and the second nut being connected to the first internal thread of the internal hole on a side where the second side surface of the baffle plate is located.

In some embodiments, the second limiting structure includes a limiting bump disposed in the internal hole, and the first sealing component is disposed between the limiting bump and the second nut.

In some embodiments, a first gasket is disposed between the first sealing component and the second nut.

In some embodiments, the sealing assembly includes at least two first sealing components, and a second gasket is disposed between at least two adjacent first sealing components.

In some embodiments, the first structural component extends through the first through-hole from a side where the second side surface of the baffle plate is located; a limiting stopper is disposed at an end of the first through-hole close to the first side surface; the component to be sealed extends through the first through-hole and the internal hole; and the sealing assembly includes a fifth sealing component, the fifth sealing component being disposed in the first through-hole, sleeved on the component to be sealed, and located between the limiting stopper and the first structural component.

In some embodiments, an outer wall of the first structural component is provided with a second external thread, and an inner wall of the first through-hole is provided with a second internal thread matching the second external thread.

In some embodiments, the first structural component is made of a conductive material, and an insulating layer is disposed between an outer surface of the first structural component and an inner wall surface of the first through-hole.

In some embodiments, the first structural component is made of an insulating material; and/or the sealing assembly is made of an insulating material.

The second aspect of the present disclosure provides a vacuum furnace comprising a sealing structure and a furnace body, an opening is provided on a side wall of the furnace body, and the sealing structure is disposed at the opening through the baffle plate.

In some embodiments, a first side surface of the baffle plate is located within the furnace body and the second side surface of the baffle is located outside the furnace body.

### BRIEF DESCRIPTION OF THE DRAWINGS

The present disclosure will be further illustrated by way of exemplary embodiments, which will be described in detail by means of the accompanying drawings. These embodiments are not limiting, and in these embodiments, the same numbering denotes the same structure, where:
FIG. 1 is a schematic diagram illustrating an exemplary structure of a sealing structure according to some embodiments of the present disclosure;
FIG. 2 is a schematic diagram illustrating an exemplary structure of a sealing structure according to some embodiments of the present disclosure;
FIG. 3 is a schematic diagram illustrating an exemplary mounting manner of a sealing assembly according to some embodiments of the present disclosure;
FIG. 4 is a schematic diagram illustrating another mounting manner of a sealing assembly according to some embodiments of the present disclosure;
FIG. 5 is a schematic diagram illustrating another mounting manner of a sealing assembly according to some embodiments of the present disclosure;
FIG. 6 is a schematic diagram illustrating another mounting manner of a sealing assembly according to some embodiments of the present disclosure;
FIG. 7 is a schematic diagram of an exemplary structure of a fourth sealing component according to some embodiments of the present disclosure;
FIG. 8 is a schematic diagram illustrating an exemplary structure of the fourth sealing component according to some other embodiments of the present disclosure;
FIG. 9 is a schematic diagram illustrating an exemplary structure of a first structural component according to some embodiments of the present disclosure;
FIG. 10 A is a schematic diagram illustrating an exemplary structure of a sealing structure according to some other embodiments of the present disclosure;
FIG. 10 B is a schematic diagram illustrating an exemplary structure of a second structural component according to some other embodiments of the present disclosure;
FIG. 11 is a schematic diagram illustrating an exemplary structure of a sealing structure according to some other embodiments of the present disclosure;
FIG. 12 is a schematic diagram illustrating an exemplary mounting manner of a second limiting structure according to some embodiments of the present disclosure;
FIG. 13 is a schematic diagram illustrating an exemplary structure of a second nut according to some embodiments of the present disclosure;
FIG. 14 is a schematic diagram illustrating an exemplary structure of a sealing structure according to some other embodiments of the present disclosure; and
FIG. 15 is a schematic diagram illustrating an exemplary structure of a vacuum furnace according to some embodiments of the present disclosure.

Description of reference numbers in the figures: 1000, sealing structure; 100, baffle plate; 101, first side surface; 102, second side surface; 103, limiting stopper; 110, first through-hole; 111, second internal thread; 200, first structural component; 201, internal hole; 202, second main ring portion; 203, second retaining ring portion; 204, third retaining ring portion; 205, first internal thread; 206, first external thread; 207, limiting bump; 208, first tool hole; 209, second external thread; 300, component to be sealed; 400, sealing assembly; 401, first sealing component; 4011, first gasket; 4012, second gasket; 402, second sealing component; 403, third sealing component; 404, fourth sealing component; 4041, limiting ring; 405, fifth sealing component; 4051, third gasket; 4052, fourth gasket; 500, second limiting structure; 501, second nut; 502, limiting convex ring; 503, second tool hole; 504, third external thread; 505, third through-hole; 600, second structural component; 601, first main ring portion; 602, first retaining ring portion; 603, second through-hole; 700, insulating layer; 800, first limiting structure; 801, first nut; 2000, vacuum furnace; 2100, furnace body.

### DETAILED DESCRIPTION

In order to more clearly illustrate the technical solutions of the embodiments of the present disclosure, the accompanying drawings required to be used in the description of the embodiments are briefly described below. Obviously, the accompanying drawings in the following description are only some examples or embodiments of the present disclosure, and a person of ordinary skill in the art may apply the present disclosure to other similar scenarios in accordance with these drawings without creative labor. Unless obviously obtained from the context or the context illustrates otherwise, the same numeral in the drawings refers to the same structure or operation.

It should be understood that the terms "system", "device", "unit" and/or "module" as used herein is a way to distinguish between different components, elements, parts, sections, or assemblies at different levels. However, the words may be replaced by other expressions if other words accomplish the same purpose.

As shown in the present disclosure and the claims, unless the context clearly suggests an exception, the words "a", "an", "one", "one kind", and/or "the" dose not refer specifically to the singular, but may also include the plural. Generally, the terms "including" and "comprising" suggest only the inclusion of clearly identified steps and elements that do not constitute an exclusive list, and the method or apparatus may also include other steps or elements.

A vacuum furnace is a device capable of providing a vacuum environment and performing heating in that environment. The vacuum furnace may have a sealed furnace chamber, which can be sealed by a metal cover or a quartz glass cover. The furnace chamber may be connected to a vacuum device through a pipeline to create a vacuum environment inside the furnace chamber. A heating device, which may include coils, may be installed inside the furnace chamber. When the coils are energized, heating within the furnace chamber may be achieved. The vacuum furnace may be used for crystal growth, vacuum quenching, vacuum brazing, vacuum annealing, vacuum magnetization, vacuum tempering, vacuum sintering, vacuum diffusion welding, and vacuum carburizing, etc.

In a vacuum furnace, some components (e.g., cables for signal transmission or heating coils) need to extend from inside the furnace chamber to the outside the furnace chamber. The following descriptions take a coil extending from inside the furnace chamber to the outside the furnace chamber as an example to illustrate. The coil used to heat the furnace chamber in a vacuum furnace needs to be energized to achieve heating, and it must extend through a furnace wall to connect with a power source located outside the furnace. A through-hole may be disposed on the furnace wall, through which an outer tube of the coil (e.g., a copper tube) may pass, allowing it to extend from inside the furnace chamber to the outside the furnace chamber. The coil may be inserted into the outer tube, which serves to protect the coil. The outer tube may be fixed to the furnace wall using a connector (e.g., a nut). There may be a gap at a through-hole (e.g., between an inner wall of the through-hole and the outer tube of the coil, as well as between the outer tube and the coil) that can affect the vacuum level of the furnace.

Embodiments of the present disclosure provide a sealing structure, wherein an internal hole of a first structural component of the sealing structure may be extended through by a component to be sealed. As a result of the provision of a sealing assembly, a gap between a baffle plate and the first structural component as well as a gap between the component to be sealed and the first structural component may be sealed, which results in enhanced sealing at a through-hole of the baffle plate. The sealing structure may be applied to a vacuum furnace to ensure a vacuum degree of the vacuum furnace. This sealing structure may be applied to a high-temperature furnace body such as an electric furnace, a converter, etc. to ensure the heat preservation performance of the electric furnace, the converter and other devices.

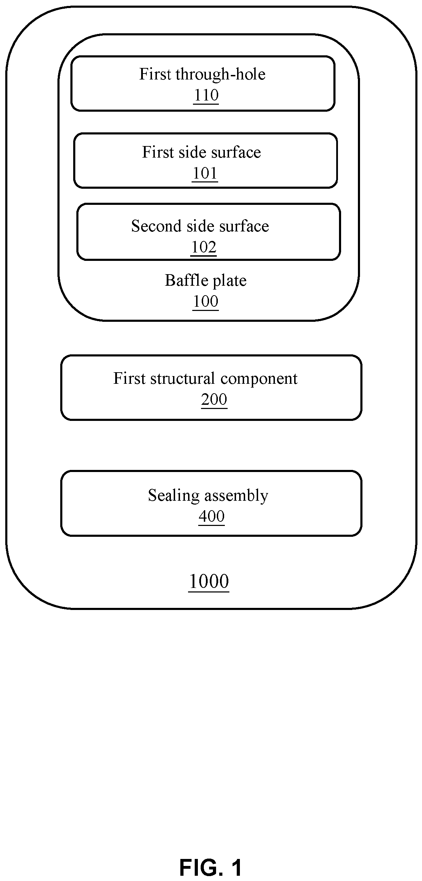

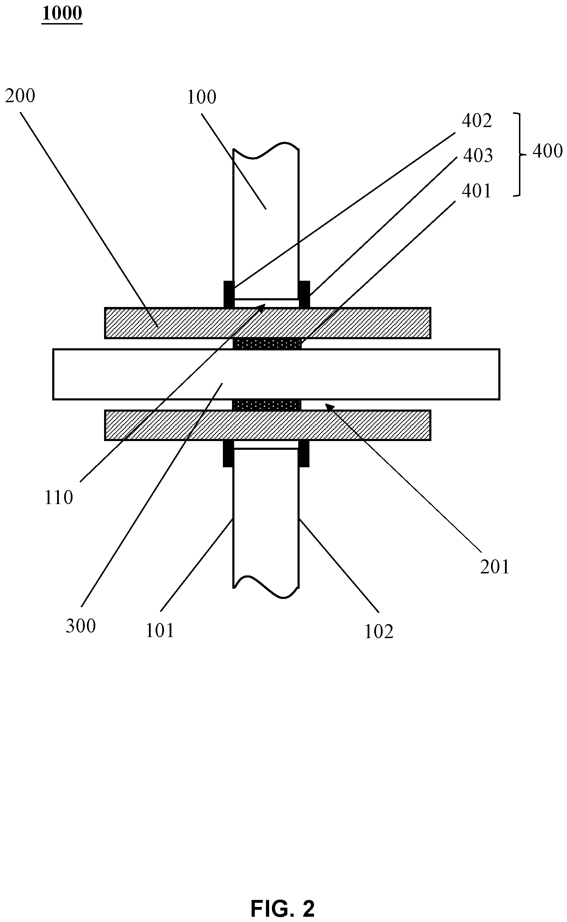

FIG. 1 and FIG. 2 are both schematic diagrams illustrating exemplary structures of a sealing structure according to some embodiments of the present disclosure, and the sealing structure is described in detail in conjunction with FIG. 2 hereinafter. As shown in FIG. 1 and FIG. 2, a sealing structure 1000 may include a baffle plate 100, a first structural component 200, and a sealing assembly 400. The baffle plate 100 is provided with a first through-hole 110, and the first through-hole 110 extends through a first side surface 101 and a second side surface 102 of the baffle plate 100. That is, the first through-hole 110 may connect a side where the first side surface 101 of the baffle plate 100 is located and a side where the second side surface 102 of the baffle plate 100 is located. The first structural component 200 is provided with an internal hole 201 for a component to be sealed 300 to extend through. The first structural component 200 is connected to the baffle plate 100. At least a part of the internal hole 201 is located within the first through-hole 110. That is, at least a part of the first structural component 200 is located within the first through-hole 110, and when the first structural component 200 is connected to the baffle plate 100, at least the part of the internal hole 201 is not parallel to both the first side surface 101 and the second side surface 102. A sealing assembly 400 seals a gap between the baffle plate 100 and the first structural component 200, as well as seals a gap between the component to be sealed 300 and the first structural component 200.

The baffle plate 100 may be used to provide a mounting base for the first structural component 200, and when the sealing structure 1000 is used in a furnace body of a vacuum furnace, an electric furnace, a converter, or the like, the baffle plate may separate an internal environment of the furnace body from an external environment of the furnace body. The first through-hole 110 in the baffle plate 100 may be used for other parts of the sealing structure 1000 to extend through. The first side surface 101 and the second side surface 102 of the baffle plate 100 represent surfaces on two sides of the baffle plate 100. In some embodiments, when the sealing assembly 400 is used in the vacuum furnace, a side surface of the baffle plate 100 facing an interior of a furnace body of the vacuum furnace may be the first side surface 101, and a side surface of the baffle plate 100 facing an exterior of the furnace body may be the second side surface 102. In some embodiments, the baffle plate 100 may be of a planar plate structure to facilitate sealing. In other embodiments, the baffle plate 100 may be other plate-like structures such as a curved plate-like structure, a corrugated plate-like structure, or the like. In some embodiments, the first side surface 101 and the second side surface 102 may be substantially parallel. In other embodiments, an angle between the first side surface 101 and the second side surface 102 may be greater than 0 degrees. For example, the angle between the first side surface 101 and the second side surface 102 may be an angle of 5 degrees, an angle of 10 degrees, etc. In some embodiments, an axis of the first through-hole 110 may be perpendicular to the first side surface 101 or the second side surface 102.

At least a part of the first structural component 200 may be located within the first through-hole 110 of the baffle plate 100 and supported by the baffle plate 100 (e.g., supported by a side wall of the first through-hole 110). The first structural component 200 may extend through the first through-hole 110, or it may merely enter without extending through the first through-hole 110. The internal hole 201 of the first structural component 200 is for the component to be sealed 300 to extend through. That at least the part of the internal hole 201 is not parallel to both the first side surface 101 and the second side surface 102 may be understood as an angle between at least the part of the internal hole 210 and the first side surface 101 is greater than 0 degrees and an angle between the internal hole 210 and the second side surface 102 is greater than 0 degrees. This ensures that the component to be sealed 300 may extend from the side where the first side surface 101 of the baffle plate 100 is located to the side where the second side surface 102 of the baffle plate 100 is located through the internal hole 201. In some embodiments, an axis of the internal hole 201 is a straight line. The internal hole 201 may extend along a direction B in FIG. 2, and an angle between the internal hole 201 and the direction B in FIG. 2 may be an angle of 5 degrees, 10 degrees, etc. In other embodiments, the axis of the internal hole 201 may be a fold line or a curve. In some embodiments, the axis of the internal hole 201 (or at least a part of the axis of the internal hole 201) and the axis of the first through-hole 110 may be (substantially) parallel or (substantially) coincident. In the present disclosure, "substantially" is used to describe that the deviation between two features is smaller than a threshold. The threshold may be an absolute value (e.g., a distance difference of 1 centimeter or 5 millimeters), or a relative value (e.g., the threshold is 10% or 5% of an aperture of the first through-hole 110).

The component to be sealed 300 may include coils, cables, or the like, for a furnace body of a vacuum furnace, an electric furnace, a converter, or the like. The component to be sealed 300 may also include an outer tube, into which the coils, cables, or the like, may be extended, and the outer tube may protect the coils, cables, or the like.

The gap between the baffle plate 100 and the first structural component 200 is formed at the first through-hole 110, and to seal the gap between the baffle plate 100 and the first structural component 200, the sealing assembly 400 may be located within the first through-hole 110, at either end of the first through-hole 110, or at two ends of the first through-hole 110. The gap between the component to be sealed 300 and the first structural component 200 is formed at the internal hole 201, and to seal the gap between the component to be sealed 300 and the first structural component 200, the sealing assembly 400 may be located within the internal hole 201, at either end of the internal hole 201, or at two ends of the internal hole 201. Please refer to the relevant description below for a specific structure and components of the sealing assembly 400. It should be noted that shapes, structures, and disposing positions of the first structural component 200 and the sealing assembly 400 in FIG. 2 are only examples, and the shapes, structures, and disposing positions of the first structural component 200 and the sealing assembly 400 in different embodiments may change.

In some embodiments, the first structural component 200 extends through the baffle plate 100 via the first through-hole 110. At this point, a length of a part of the first structural component 200 that extends through the first through-hole 110 is longer than a length of the first through-hole 110. The sealing assembly 400 may include a first sealing component 401. The first sealing component 401 is configured to seal the gap between the component to be sealed 300 and the first structural component 200. The first sealing component 401 is disposed between an inner wall of the internal hole 201 and the component to be sealed 300. In some embodiments, the first sealing component 401 may be a sealing ring sleeving on the component to be sealed 300. In some embodiments, after the sealing ring (the first sealing component 401) is installed between the inner wall of the internal hole 201 and the component to be sealed 300, the sealing ring (the first sealing component 401) may be in a compressed state to enhance the sealing effect of the first sealing component 401. In other embodiments, the first sealing component 401 may be a sealant (e.g., a sealant that is solid when set), and the sealant (the first sealing component 401) may seal the gap between the first sealing component 401 and the component to be sealed 300 at the internal hole 201.

In some embodiments, when the first sealing component 401 is a sealing ring, an outer contour of a cross-section of the first sealing component 401 may be circular, oval, triangular, rectangular, polygonal, or irregularly shaped, or the like.

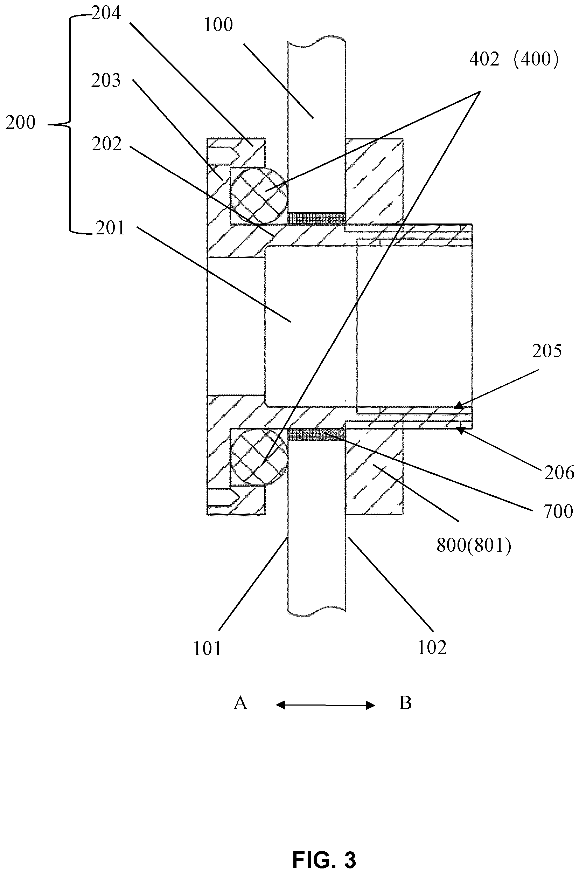

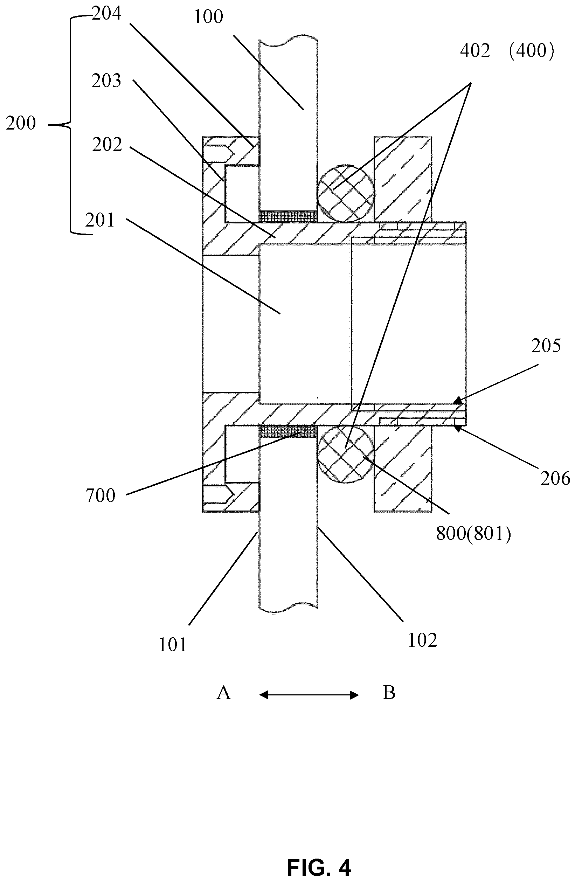

FIG. 3 is a schematic diagram illustrating an exemplary mounting manner of a sealing assembly according to some embodiments of the present disclosure, and FIG. 4 is a schematic diagram illustrating another mounting manner of a sealing assembly according to some embodiments of the present disclosure. In some embodiments, as shown in FIG. 3 and FIG. 4, the sealing assembly 400 includes a second sealing component 402, the second sealing component 402 abutting against the baffle plate 100. The second sealing component 402 is disposed at one end of the first through-hole 110 to seal a gap between the baffle plate 100 and the first structural component 200.

In some embodiments, as shown in FIG. 3, the second sealing component 402 may abut against the first side surface 101 of the baffle plate 100. In some embodiments, as shown in FIG. 4, the second sealing component 402 may abut against the second side surface 102 of the baffle plate 100. In some embodiments, the second sealing component 402 may include a sealing ring sleeving on the first structural component 200. In other embodiments, the second sealing component 402 may include a sealant (e.g., a sealant that is solid when set), and the sealant may seal the gap between the baffle plate 100 and the first structural component 200 at the first through-hole 110.

In some embodiments, when the second sealing component 402 is a sealing ring, an outer contour of a cross-section of the second sealing component 402 may be circular, oval, triangular, rectangular, polygonal, or irregularly shaped, or the like.

By setting the second sealing component 402 abutting against the baffle plate 100, the second sealing component 402 can effectively seal the gap between the baffle plate 100 and the first structural component 200. Moreover, since the second sealing component 402 realizes sealing by being set at an end portion of the first through-hole 110 and abutting against the baffle plate 100, a placement of the second sealing component 402 is basically not limited by a size of the first internal hole110, and the second sealing component 402 is less constrained in terms of its shape and dimensions, and is easier to be installed.

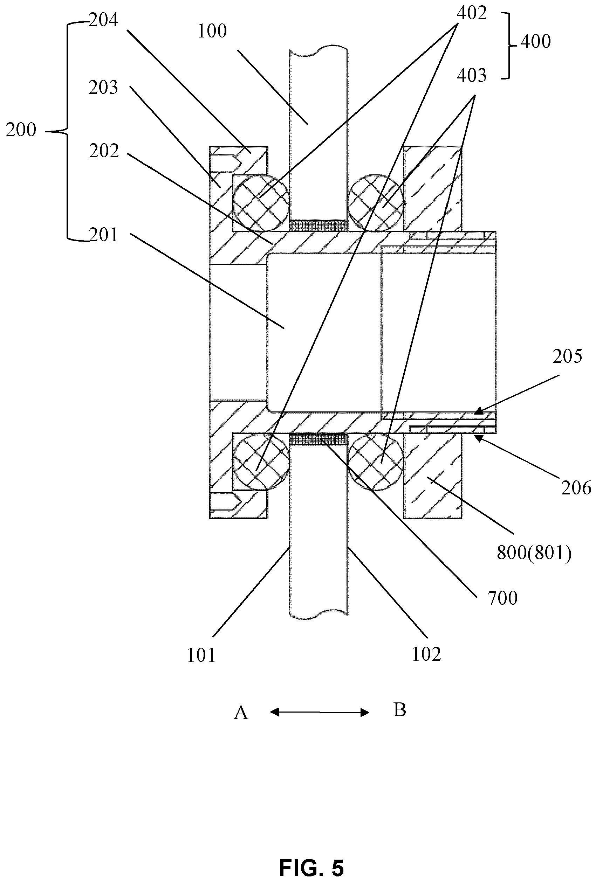

FIG. 5 is a schematic diagram illustrating another installation manner of a sealing assembly according to some embodiments of the present disclosure. As shown in FIG. 5, the sealing assembly 400 further includes a third sealing component 403, the third sealing component 403 abutting against the baffle plate 100. The third sealing component 403 may be used to seal the gap between the baffle plate 100 and the first structural component 200. The second sealing component 402 and the third sealing component 403 may be disposed at two ends of the first through-hole 110, respectively. The second sealing component 402 and the third sealing component 403 may abut against the first side surface 101 and the second side surface 102 of the baffle plate 100, respectively. The structure, shape of the third sealing component 403 may be similar to that of the second sealing component 402, and please refer to regarding descriptions of the second sealing component 402.

By providing the second sealing component 402 and the third sealing component 403 at the two ends of the first through-hole 110, the gap between the baffle plate 100 and the first structural component 200 can be better sealed, placements of the second sealing component 402 and the third sealing component 403 are basically not limited by a size of the first through-hole 110, and shapes and sizes of the second sealing component 402 and the third sealing component 403 are less restricted.

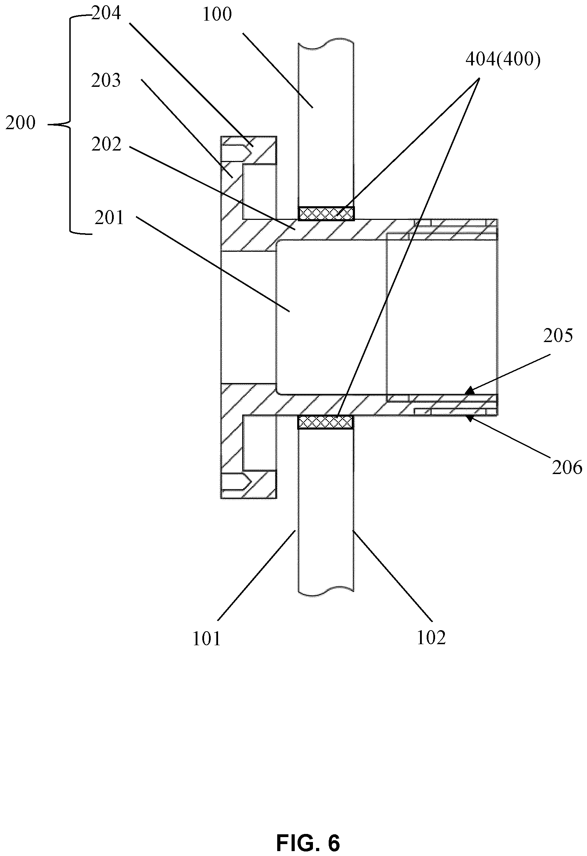

FIG. 6 is a schematic diagram illustrating another mounting manner of a sealing assembly according to some embodiments of the present disclosure. As shown in FIG. 6, the sealing assembly 400 may include a fourth sealing component 404. The fourth sealing component 404 may be used to seal a gap between the baffle plate 100 and the first structural component 200. At least a part of the fourth sealing component 404 is provided between an inner wall of the first through-hole 110 of the baffle plate 100 and an outer wall of the first structural component 200. That is, at least the part of the fourth sealing component 404 is located within the first through-hole 110 of the baffle plate 100.

In some embodiments, the fourth sealing component 404 may be a sealing ring. The sealing ring (the fourth sealing component 404) may be located within the first through-hole 110 of the baffle plate 100 and the sealing ring (the fourth sealing component 404) may sleeve on the first structural component 200. In other embodiments, the fourth sealing component 404 may be a sealant (e.g., a sealant that is solid when set) located within the first through-hole 110 of the baffle plate 100 and disposed between the inner wall of the first through-hole 110 of the baffle plate 100 and the outer wall of the first structural component 200, and the sealant (the fourth sealing component 404) may be used to seal the gap between the first structural component 200 and the baffle plate 100 within the first through-hole 110.

When the fourth sealing component 404 is a sealing ring, the fourth sealing component 404 may have different shapes. A shape of the fourth sealing component 404 may be similar to a shape of the first sealing component 401. In the embodiment shown in FIG. 6, the fourth sealing component 404 may be a regular circular structure, and the fourth sealing component 404 is entirely located within the first through-hole 110 of the baffle plate 100.

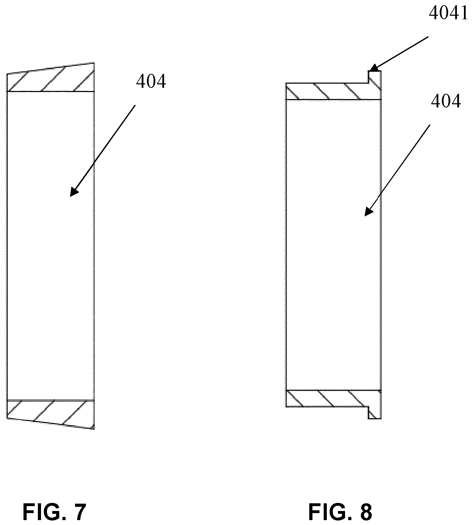

FIG. 7 is a schematic diagram illustrating an exemplary structure of a fourth sealing component according to some embodiments of the present disclosure. In some embodiments, as shown in FIG. 7, when the fourth sealing component 404 is a sealing ring, an inner ring of the fourth sealing component 404 is cylindrical and an outer ring of the fourth sealing component 404 is conical. By designing the outer ring as a conical shape, it is easy to place the fourth sealing component 404 into the first through-hole 110 by placing the fourth sealing component 404 into the first through-hole 110 from an end of the outer ring that has a smaller diameter. In some embodiments, an outer diameter of one end of the conical outer ring may be slightly smaller than a diameter of the first through-hole 110, and an outer diameter of the other end of the conical outer ring may be substantially equal to the diameter of the first through-hole 110. An end of the outer ring of the fourth sealing component 404 with a relative larger diameter may be interference fit with the inner wall of the first through-hole 110 of the baffle plate 100, which may enhance the sealing effect of the fourth sealing component 404. In some embodiments, an outer diameter of one end of the conical outer ring may be slightly smaller than the diameter of the first through-hole 110, and an outer diameter of the other end of the conical outer ring may be larger than the diameter of the first through-hole 110. By such a setting, a part of the fourth sealing component 404 may be located within the first through-hole 110 of the baffle plate 100 and the other part of the fourth sealing component may be located outside the first through-hole 110 of the baffle plate 100. By such a setting, the fourth sealing component 404 can be prevented from moving along a direction A shown in FIG. 6 while ensuring the sealing effect.

FIG. 8 is a schematic diagram illustrating an exemplary structure of a fourth sealing component according to some other embodiments of the present disclosure. In some embodiments, as shown in FIG. 8, one end of the fourth sealing component 404 is provided with a limiting ring 4041 extending outwardly along a radial direction, and an outer diameter of the limiting ring 4041 is larger an inner diameter of the first through-hole 110 of the baffle plate 100, so that the limiting ring 4041 may not pass through the first through-hole 110 of the baffle plate 100 when the fourth sealing component 404 is mounted, thereby playing a role of limiting a position. That is, the fourth sealing component 404 shown in FIG. 8 can prevent the fourth sealing component 404 from moving along the direction A shown in FIG. 6 while ensuring the sealing effect.

In some embodiments, when the fourth sealing component 404 is a sealing ring, a length of the fourth sealing component 404 along an axial direction of the sealing ring may be greater than, smaller than, or equal to a length of the first through-hole 110 of the baffle plate 100 along the axis of the first through-hole 110. When the length of the fourth sealing component 404 along the axial direction of the sealing ring is greater than the length of the first through-hole 110 along the axis of the first through-hole 110, two ends of the fourth sealing component 404 may extend beyond two ends of the first through-hole 110. Therefore, the fourth sealing component 404 may completely cover the gap between the baffle plate 100 and the first structural component 200, which is conducive to improving a sealing strength of the fourth sealing component 404.

In some embodiments, continuing referring to FIG. 3 to FIG. 5, the sealing structure 1000 further includes a first limiting structure 800. The first limiting structure 800 may limit a position of the first structural component 200 within the first through-hole 110 (e.g., by limiting a relative position of the first structural component 200 to the baffle plate 100, and thus limiting the position of the first structural component 200 within the first through-hole 110). It should be understood that the first limiting structure 800 may limit a position of the first structural component 200 along only one direction, i.e., the first limiting structure 800 may limit a movement of the first structural component 200 with respect to the baffle plate 100 along only one direction. For example, the first limiting structure 800 in FIG. 3 to FIG. 5 may prevent the first structural component 200 from moving along the direction A shown in FIG. 3 to FIG. 5. In some embodiments, the first limiting structure 800 may cooperate with other structures to secure the position of the first structural component 200 within the first through-hole 110 to allow the baffle plate 100 and the first structural component 200 to be connected and achieve fixation of a relative position between the first structural component 200 and the baffle plate 100. For example, the first limiting structure 800 may cooperate with a second retaining ring portion 203 of the first structural component 200 as described below (the second retaining ring portion 203 may prevent a movement of the first structural component 200 along a direction B shown in FIG. 3 to FIG. 5) to secure the position of the first structural component 200 within the first through-hole 110, thereby realizing the fixation of the relative position between the first structural component 200 and the baffle plate 100.

In some embodiments, the first limiting structure 800 may include a stopping block, and the stopping block is disposed on a side of the baffle plate 100 where the second side surface 102 is located. In some embodiments, the stopping block may abut against the baffle plate 100 as shown in FIG. 3, thereby preventing the movement of the first structural component 200 along the direction A shown in FIG. 3 to FIG. 5.

In some embodiments, as shown in FIG. 4, the second sealing component 402 and the stopping block are both disposed on the side of the baffle plate 100 where the second side surface 102 of the baffle plate 100 is located, the second sealing component 402 may abut against the second side surface 102 of the baffle plate 100, and the stopping block may but against the second sealing component 402. By such a setting, the first limiting structure 800 not only prevents the first structural component 200 from moving along the direction A, but also exerts a pressure on the second sealing component 402 to press the second sealing component 402 against the baffle plate 100, thereby enabling the second sealing component 402 to provide a better sealing effect.

In some embodiments, as shown in FIG. 5, the second sealing component 402 and the third sealing component 403 are disposed on two sides of the baffle plate 100, respectively, and the second sealing component 402 and the third sealing component 403 abuts against the first side surface 101 and the second side surface 102 of the baffle plate 100, respectively. The stopping block may be disposed on the side of the baffle plate 100 where the second side surface 102 is located and the stopping block may abut against the third sealing component 403. By such a setting, the first limiting structure 800 not only prevents the first structural component 200 from moving along the direction A, but also exerts a pressure on the third sealing component 403 to presses the third sealing component 403 against the baffle plate 100, thereby enabling the third sealing component 403 to provide a better sealing effect.

In some embodiments, the first limiting structure 800 (e.g., the stopping block above) may limit a position together with the first structural component 200 in a variety of connection manners such as, snap-fit connection, a threaded connection, etc.

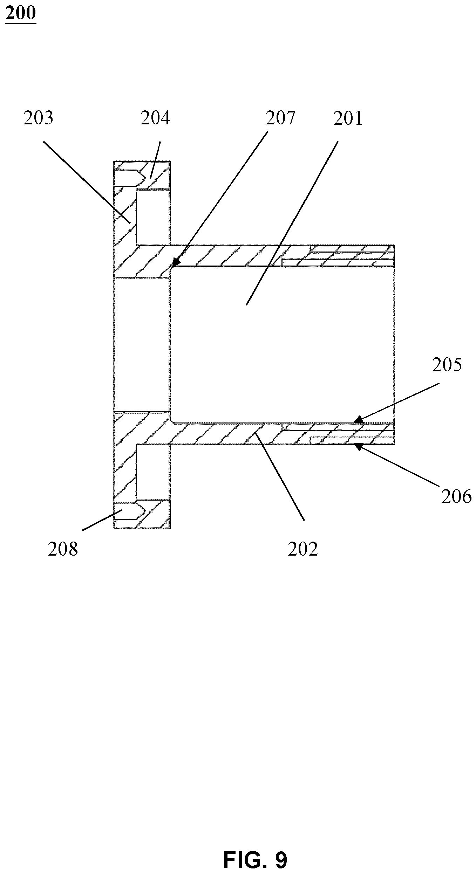

In some embodiments, the first limiting structure 800 may limit a position by a threaded connection. FIG. 9 is a schematic diagram illustrating an exemplary structure of a first structural component according to some embodiments of the present disclosure. As shown in FIG. 3 to FIG. 5 and FIG. 9, in some embodiments, the first limiting structure 800 includes a first nut 801 and a first external thread 206. That is, the stopping block described above may be the first nut 801. The first external thread 206 is disposed on the first structural component 200. When the first structural component 200 is placed into the first through-hole 110, at least a part of the first external thread 206 may be located on a side where the second side surface 102 of the baffle plate 100 is located. The first nut 801 is threadedly connected to the first external thread 206 of the first structural component 200 on the side where the second side surface 102 of the baffle plate 100 is located. The first nut 801 may be controlled to move back and forth on the first external thread 206 by rotating the first nut 801 to move closer to or further away from the baffle plate 100. By controlling a movement of the first nut 801 along a direction proximate to the baffle plate 100, when the first nut 801 abuts against the baffle plate 100 (as described in embodiments in FIG. 3), the second sealing component 402 (as described in embodiments in FIG. 4), or the third sealing component 403 (as described in embodiments in FIG. 5), the first nut 801 may exert a pressure on the baffle plate 100, the second sealing component 402, or the third sealing component 403. When the first nut 801 abuts against the second sealing component 402 (as described in embodiments in FIG. 4) or the third sealing component 403 (as described in embodiments in FIG. 5), by controlling the movement of the first nut 801 along the direction proximate to the baffle plate 100, the second sealing component 402 or the third sealing component 403 may be compressed correspondingly to ensure sealing effect.

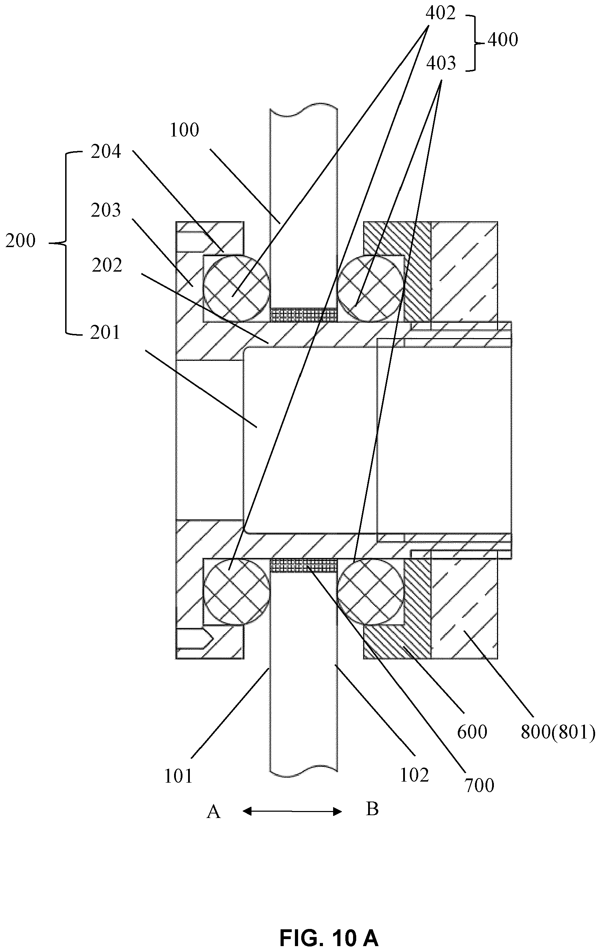

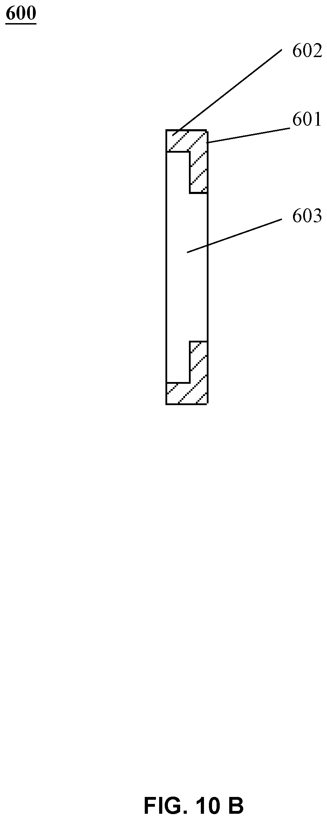

FIG. 10 A is a schematic diagram illustrating an exemplary structure of a sealing structure according to some other embodiments of the present disclosure, and FIG. 10 B is a schematic diagram illustrating an exemplary structure of a second structural component according to some other embodiments of the present disclosure. The following is a detailed description of a second structural component 600 in combination with FIG. 10 A and FIG. 10 B. As shown in FIG. 10 A, the second structural component 600 sleeves on the first structural component 200 and is disposed between the first nut 801 and the third sealing component 403. The second structural component 600 may sleeve on the first structural component 200 and disposed between the first nut 801 and the third sealing component 403 for contacting and limiting a position of the third sealing component 403. In some embodiments, as shown in FIG. 10B, the second structural component 600 may be provided with a second through-hole 603. As shown in FIG. 10 A, the first structural component 200 may extend into the second through-hole 603 of the second structural component 600.

In some embodiments, the second structural component 600 may include a first main ring portion 601 sleeving on the first structural component 200. An inner ring of the first main ring portion 601 may form the second through-hole 603 on the second structural component 600 for the first structural component 200 to extend through. A side of the first main ring portion 601 away from the baffle plate 100 abuts against the first nut 801, and the second structural component 600 may be driven to move synchronously when the first nut 801 moves.

In some embodiments, the second structural component 600 may further include a first retaining ring portion 602. The first retaining ring portion 602 is disposed at an end along an axial direction of the first main ring portion 601. When the first main ring portion 601 sleeves on the first structural component 200, the first retaining ring portion 602 is disposed on a side of the first main ring portion 601 that is close to the baffle plate 100. When the first main ring portion 601 sleeves on the first structural component 200, both the third sealing component 403 and the first retaining ring portion 602 are disposed between the baffle plate 100 and the first main ring portion 601. The third sealing component 403 is disposed in an inner ring of the first retaining ring portion 602.

With the above-described structural design of the second structural component 600, the first main ring portion 601 may be used to limit a position of the third sealing component 403 along an axial direction of the first through-hole 110 of the baffle plate 100. The first retaining ring portion 602 is configured to limit the position of the third sealing component 403 along a radial direction of the first through-hole 110 of the baffle plate 100. The second structural component 600, by providing the first main ring portion 601 and the first retaining ring portion 602, may limit the position of the third sealing component 403 along the axial direction and the radial direction of the first through-hole 110 so that the third sealing component 403 can be tightly abutted against the first main ring portion 601 and the baffle plate 100, thereby suitably sealing a gap between the second structural component 600 and the baffle plate 100. In addition, the second structural component 600 may avoid direct contact with the first nut 801 and the third sealing component 403, which can effectively reduce wear and tear of the third sealing component 403, thereby extending a service life of the third sealing component 403.

In some embodiments, the second structural component 600 may be a spacing plate having the second through-hole 603, wherein the first structural component 200 is threaded through the second through-hole 603 of the spacing plate to allow the spacing plate to sleeve on the first structural component 200. In some embodiments, a side of the spacing plate facing the baffle plate 100 may be provided with a groove having an arcuate bottom, and the third sealing component 403 may be located within the groove of the spacing plate, and the groove of the spacing plate limit the position of the third sealing component 403.

It should be understood that when the second sealing component 402 is provided on the side on which the second side surface 102 of the baffle plate 100 is located (i.e., in the embodiments in FIG. 4), the second structural component 600 may be similarly provided following the description above.

A structure of the first structural component 200 is described in detail below in conjunction with FIG. 3 to FIG. 5 and FIG. 9. As shown in FIG. 9, the first structural component 200 includes a second main ring portion 202. The second main ring portion 202 may extend through the baffle plate 100 via the first through-hole 110 of the baffle plate 100. That is, an outer diameter of the second main ring portion 202 is smaller than a diameter of the first through-hole 110, and the second main ring portion 202 may extend through the baffle plate 100 from a side where the first side surface 101 of the baffle plate 100 is located to a side where the second side surface 102 of the baffle plate 100 is located. The internal hole 201 is formed within the second main ring portion 202.

In some embodiments, the first structural component 200 may further include the second retaining ring portion 203. When the first structural component 200 is mounted within the first through-hole 110 of the baffle plate 100, the second retaining ring portion 203 is disposed on the side of the baffle plate 100 where the first side surface 101 is located, and the second retaining ring portion 203 may wrap around the second main ring portion 202. That is, the second retaining ring portion 203 may be provided on an outer circular surface of the second main ring portion 202, an outer diameter of the second retaining ring portion 203 is larger than the diameter of the first through-hole 110, and when the second main ring portion 202 extends through the baffle plate 100, the second retaining ring portion 203 may not extend through the first through-hole 110. The second retaining ring portion 203 may limit a position of the first structural component 200. The second retaining ring portion 203 may prevent the first structural component 200 from moving along the direction B shown in FIG. 3 to FIG. 5.

In some embodiments, as shown in FIG. 3 and FIG. 5, when the second sealing component 402 is located on the side where the first side surface 101 of the baffle plate 100 is located, the second sealing component 402 may sleeve on the second main ring portion 202. At the same time, the second sealing component 402 may abut against the second retaining ring portion 203, and the second retaining ring portion 203 may limit the position of the second sealing component 402 along an axial direction of the second main ring portion 202 (also an axial direction of the first through-hole 110), preventing the second sealing component 402 from detaching from the second main ring portion 202.

In some embodiments, as shown in FIG. 3 to FIG. 5 and FIG. 9, the first structural component 200 may further include a third retaining ring portion 204. The third retaining ring portion 204 is located on the side where the first side surface 101 of the baffle plate 100 is located and is disposed on a side of the second retaining ring portion 203 facing the baffle plate 100. An inner diameter of the third retaining ring portion 204 is larger than the outer diameter of the second main ring portion 202, and an annular groove is formed between the third retaining ring portion 204 and the second main ring portion 202. In some embodiments, an outer diameter of the third retaining ring portion 204 may be equal to the outer diameter of the second retaining ring portion 203.

In some embodiments, as shown in FIG. 3 and FIG. 5, the second sealing component 402 sleeves on the second main ring portion 202, while the second sealing component 402 may be located within an inner ring of the third retaining ring portion 204. That is, the second sealing component 402 may be located within the annular groove formed between the third retaining ring portion 204 and the second main ring portion 202. The third retaining ring portion 204 is configured to limit the position of the second sealing component 402 along a radial direction of the second main ring portion 202 (also the radial direction of the first through-hole 110).

In other embodiments, a side of the second retaining ring portion 203 facing the baffle plate 100 may be provided with a groove having a curved bottom, the second sealing component 402 may be located within the groove of the second retaining ring portion 203, and the groove of the second retaining ring portion 203 may limit the position of the second sealing component 402. In other embodiments, the second main ring portion 202 may be provided with other limiting mechanisms to prevent the first structural component 200 from moving along the direction B shown in FIG. 3 to FIG. 6. For example, the second main ring portion 202 may be provided with a limiting block, and the limiting block is unable to enter the first through-hole 110, thereby serving as a limiting mechanism.

In some embodiments, the outer diameter of the second main ring portion 202 may be in a range of 15 mm to 750 mm. In some embodiments, an inner diameter of the second main ring portion 202 may be in a range of 10 mm to 500 mm. The inner diameter of the second main ring portion 202 is also a diameter of the internal hole 201. In some embodiments, a ratio of the outer diameter of the second main ring portion 202 to the inner diameter of the second main ring portion 202 may be in a range of 1.1 to 2. By setting a dimension of the second main ring portion 202, a structure of the first structural component 200 may be made more reasonable and compact.

In some embodiments, the diameter of the first through-hole 110 may be in a range of 17 mm to 800 mm. In some embodiments, a ratio of the diameter of the first through-hole 110 to the inner diameter of the second main ring portion 202 may be in a range of 1.2 to 2.5. By designing the dimensions of the first through-hole 110 and the second main ring portion 202, it is possible to make various components of a sealing structure fit better with each other, so that the sealing structure can achieve a better sealing effect.

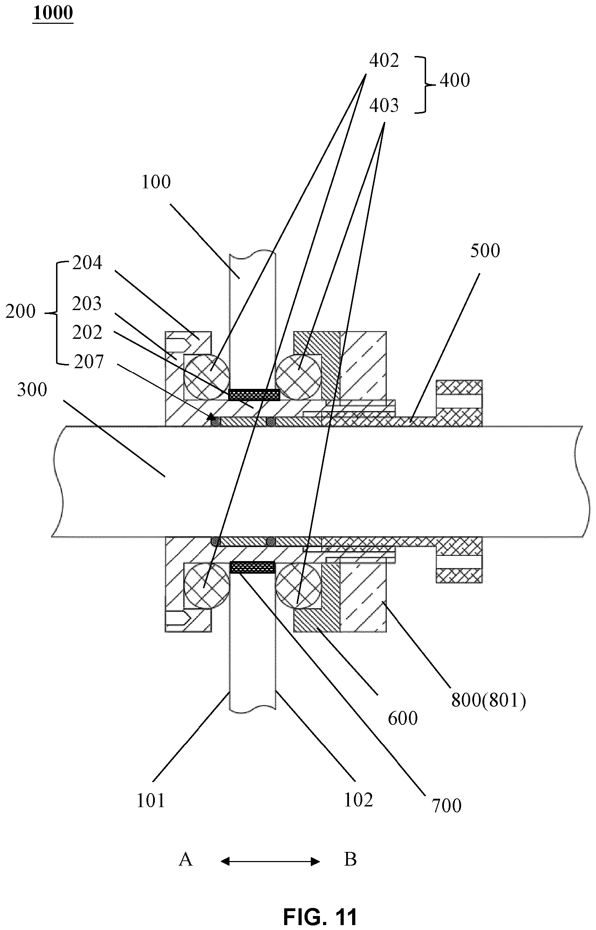

FIG. 11 is a schematic diagram illustrating an exemplary structure of a sealing structure according to some other embodiments of the present disclosure. In some embodiments, as shown in FIG. 11, the sealing structure further includes a second limiting structure 500. The second limiting structure 500 may be configured to limit a position of the first sealing component 401 within the internal hole 201, thereby improving the stability of the first sealing component 401 and preventing the first sealing component 401 from falling off. In some embodiments, the second limiting structure 500 may also apply a pressure to the first sealing component 401 to enhance the sealing effect of the first sealing component 401.

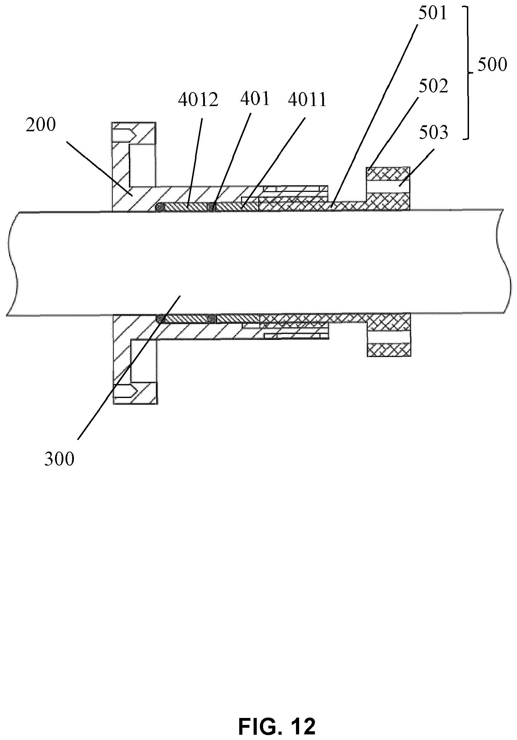

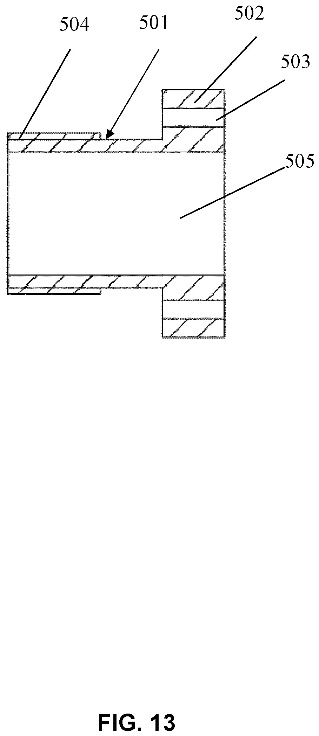

FIG. 12 is a schematic diagram illustrating an exemplary mounting manner of the second limiting structure according to some embodiments of the present disclosure. FIG. 13 is a schematic diagram illustrating an exemplary structure of a second nut according to some embodiments of the present disclosure. The second limiting structure is described in detail below in conjunction with FIG. 12 and FIG. 13. As shown in FIG. 12 and FIG. 13, the second limiting structure 500 includes a second nut 501 and a first internal thread 205. The second nut 501 is provided with a third external thread 504 capable of being threadedly connected with the first internal thread 205. The first internal thread 205 is located within the internal hole 201 of the first structural component 200. The second nut 501 is connected to the first internal thread 205 of the internal hole 201 on a side where the second side surface 102 of the baffle plate 100 is located. In some embodiments, at least a part of the first internal thread 205 may be located on the side where the second side surface 102 of the baffle plate 100 is located after the first structural component 200 is installed within the first through-hole 110.

The second nut 501 may abut against the first sealing component 401, and after the second nut 501 is screwed in, the second nut 501 may limit a space of movement of the first sealing component 401. Furthermore, the second nut 501 may squeeze the first sealing component 401, thereby enhancing the sealing effect of the first sealing component 401.

In some embodiments, the second nut 501 is provided with a limiting convex ring 502, and an outer diameter of the limiting convex ring 502 may be larger than a diameter of the internal hole 201 to limit a length of the second nut 501 extending into the internal hole 201. In some embodiments, the outer diameter of the limiting convex ring 502 may be larger than the diameter of the first through-hole 110 of the baffle plate 100.

In some embodiments, the second nut 501 may be provided with a third through-hole 505 extending along its own axis for the component to be sealed 300 to extend through. With the provision of the third through-hole 505, the component to be sealed 300 may be smoothly threaded to the side where the second side surface 102 of the baffle plate 100 is located without being restricted by the second nut 501.

In some embodiments, as shown in FIG. 9 and FIG. 11, the second limiting structure 500 further includes a limiting bump 207. The limiting bump 207 is disposed at an end of the internal hole 201 that is close to the first side surface 101 of baffle plate 100. The first sealing component 401 is provided between the limiting bump 207 and the second nut 501. The first sealing component 401 may abut against the limiting bum 207, and the limiting bump 207 may be configured to restrict a movement of the first sealing component 401 toward the first side surface 101 of the baffle plate 100 along an axial direction of the internal hole 201. After the second nut 501 is abutted against the first sealing component 401, the first sealing component 401 may be pressed against the limiting bump 207, which is conducive to improving the stability and sealing effect of the first sealing component 401.

The second limiting structure 500 may realize the effect of preventing the first sealing component 401 from falling off through a variety of structures. In some embodiments, the second limiting structure 500 may also include a first limiting plug, which may be plugged into the internal hole 201 directly from the side where the second side surface 102 of the baffle plate 100 is located to prevent the first sealing component 401 from falling off. The first limiting plug may be snapped into the internal hole 201 or may be fixed relative to an inner wall of the internal hole 201 by friction. The first limiting plug may prevent the first sealing component 401 from detaching from the side where the second side surface 102 of the baffle plate 100 is located.

In other embodiments, the second limiting structure 501 may further include a second limiting plug or a third nut, the second limiting plug and the third nut may be placed within the internal hole 201 from a side where the first side surface 101 of the baffle plate 100 is located, and the second limiting plug or the third nut may prevent the first sealing component 401 from detaching from the side where the first side surface 101 of the baffle plate 100 is located. The second limiting plug may be provided in a manner similar to the manner in which the first limiting plug is provided, and the third nut may be provided in a manner similar to the manner in which the second nut 501 is provided, as described above.

In some embodiments, a count of the first sealing component 401 may be at least two. With the provision of at least two first sealing components 401, the gap between the first structural component 200 and the component to be sealed 300 may be better sealed.

In some embodiments, a first gasket 4011 may be provided between the first sealing component 401 and the second nut 501. In some embodiments, the first gasket 4011 may be annular. A material for making the first gasket 4011 includes but is not limited to, copper, stainless steel, or the like. The first gasket 4011 may be replaced after the first gasket 4011 is worn. When the second nut 501 is screwed, the second nut 501 may abut against the first gasket 4011 and push the first gasket 4011 and the first sealing component 401 towards the limiting bump 207, which may compress the first sealing component 401 between the limiting bump 207 and the second nut 501.

By providing the first gasket 4011 between the second nut 501 and the first sealing component 401, the first sealing component 401 may be effectively protected from the wear and tear of the second nut 501 to extend a service life of the first sealing component 401.

In some embodiments, when the sealing assembly include multiple first sealing components 401, a second gasket 4012 may be disposed between the at least two first sealing components 401. A material for making the second gasket 4012 includes, but is not limited to, copper, stainless steel, or the like. In some embodiments, for a part of two adjacent first sealing components 401, the second gasket 4012 may be disposed between the two first sealing components 401, and for the other part of two adjacent first sealing components 401, the second gasket 4012 may not be disposed between the two first sealing components 401.

By providing the second gasket 4012 between two adjacent first sealing components 401, direct contact between the two first sealing components 401 can be avoided, and when there are multiple first sealing components 401, wear and tear between the at least two first sealing components 401 can be effectively minimized, thereby extending the service life of the first sealing components 401.

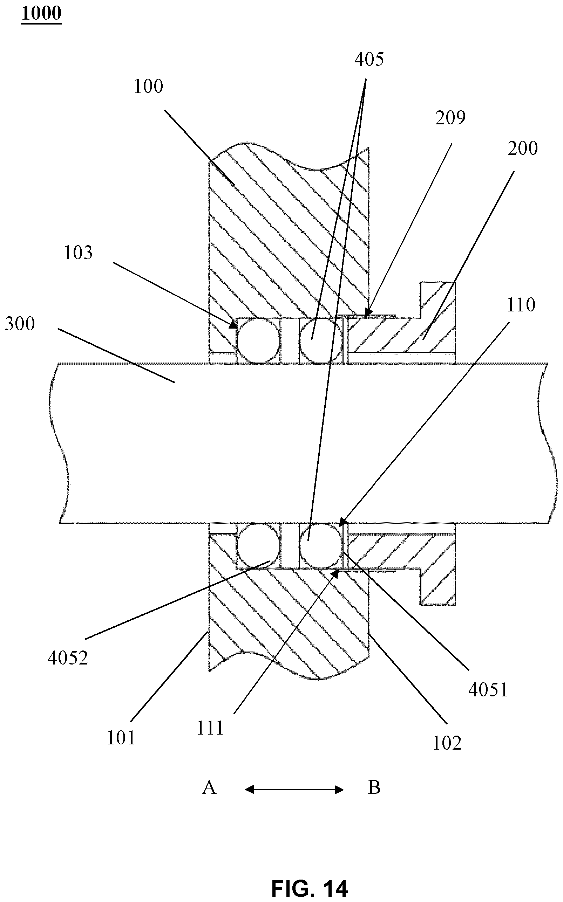

FIG. 14 is a schematic diagram illustrating an exemplary structure of a sealing structure according to some other embodiments of the present disclosure. The first structural component 200 is described in detail below in conjunction with FIG. 14. As shown in FIG. 14, the first structural component 200 extends into the first through-hole 110 from a side where the second side surface 102 of the baffle plate 100 is located. The first structural component 200 does not extend through the first through-hole 110. The component to be sealed 300 extends through the first through-hole 110 and the internal hole 201. The sealing assembly includes a fifth sealing component 405.

The first through-hole 110 is provided with a limiting stopper 103 at an end of the first through-hole close to a side where the first side surface 101 is located. The fifth sealing component 405 sleeves on the component to be sealed 300 and located disposed between the limiting stopper 103 and the first structural component 200. In some embodiments, the limiting stopper 103 may prevent the fifth sealing component 405 from detaching from the first through-hole 110 from the side where the first side surface 101 is located. A combination of the limiting stopper 103 and the first structural component 200 may limit the position of the fifth sealing component 405. In some embodiments, the first structural component 200 may be used to apply a pressure to the fifth sealing component 405 to ensure the sealing effect of the fifth sealing component 405. The fifth sealing component 405 may be configured to seal both the gap between the first structural component 200 and the component to be sealed 300 and the gap between the baffle plate 100 and the first structural component 200, and a structure of the sealing structure 1000 is simplified.

The first structural component 200 is connected within the first through-hole 110 of the baffle plate 100. The first structural component 200 may be connected to the first through-hole 110 by a removable connection manner such as a snap-fit connection, a threaded connection, or the like.

In some embodiments, the second external thread 209 is provided on an outer wall of the first structural component 200, and an inner wall of the first through-hole 110 is provided with a second internal thread 111 that is threadedly connected to the second external thread 209. The first structural component 200 and the first through-hole 110 may be threadedly connected, and the first structural component 200 may exert a pressure on the fifth sealing component 405 when it is screwed in, and the pressure may be easily controlled by controlling a screwing distance.

In some embodiments, a count of the fifth sealing component 405 may be at least two. With the provision of at least two fifth sealing components 405, the gap between the first structural component 200 and the component to be sealed 300 and the gap between the first structural component 200 and the component to be sealed 300 may be sealed well.

In some embodiments, a third gasket 4051 may be provided between the fifth sealing component 405 and the first structural component 200. The third gasket 4051 may prevent the first structural component 200 from wearing out the fifth sealing component 405, thereby extending a service life of the fifth sealing component 405. A material for making the third gasket 4051 includes but is not limited to, copper, stainless steel, or the like.

In some embodiments, the count of the fifth sealing component 405 may be multiple. A fourth gasket 4052 may be provided between at least two adjacent fifth sealing components 405. A material for making the fourth gasket 4052 includes but is not limited to, copper, stainless steel, or the like.

By providing the fourth gasket 4052 between two adjacent fifth sealing components 405, direct contact between the fifth sealing components 405 can be avoided, and when there are multiple fifth sealing components 405, wear and tear between the at least two fifth sealing components 405 can be effectively reduced, thereby extending the service life of the fifth sealing components 405.

In some embodiments, the first structural component 200 may be made of a conductive material. In some embodiments, as shown in FIG. 3 to FIG. 5, an insulating layer 700 is provided between the first structural component 200 and an inner wall surface of the first through-hole 110, and the insulating layer 700 insulates the baffle plate 100 from the first structural component 200, improving the safety performance of the sealing structure. In some embodiments, the first structural component 200 may be made of a metallic conductive material with a low magnetic permeability (e.g., a relative magnetic permeability of smaller than 2) such as, copper, stainless steel, aluminum, or the like. The insulating layer 700 is made of an insulating material. The insulating material may be made of a rubbery elastomeric material with electrical insulating properties, such as polytetrafluoroethylene, fluoroelastomers, nitrile rubbers, polyurethane rubbers, or the like.

In some embodiments, the first structural component 200 may be made of an insulating material. The material for making the first structural component 200 may be similar to the material for making the insulating layer 700. By using the insulating material to make the first structural component 200, it is unnecessary to provide an insulating component (e.g., the insulating layer 700) between the first structural component 200 and the baffle plate 100, which can simplify a count of components of the sealing structure and improving the sealing effect.

In some embodiments, the sealing assembly 400 may be made of an insulating material. The material for making the sealing assembly 400 may be similar to the material for making the insulating layer 700. In some embodiments, the second sealing component 402 may be made of an insulating material. In some embodiments, the insulating layer 700 and the second sealing component 402 may be an integral structure. In some embodiments, materials for making the second sealing component 402 and the third sealing component 403 may both be insulating materials. In some embodiments, the insulating layer 700, the second sealing component 402, and the third sealing component 403 may be an integral structure. In some embodiments, the first sealing component 401 is made of an insulating material. Technical effects that may be realized by the foregoing embodiments include but are not limited to, by employing the insulating layer 700, the first sealing component 401, the second sealing component 402, and the third sealing member 403 made of insulating materials, the insulation between the baffle plate 100 and the first structural component 200, the insulation between the baffle plate 100 and the second structural component 600, and the insulation between the baffle plate 100 and the component to be sealed 300 can be realized.

In some embodiments, tool holes may be provided on the first structural component 200, the first nut 801, and/or the second nut 501. The tool holes are configured to facilitate the insertion of auxiliary tools (e.g., a pin) and mounting actions (e.g., screwing, pushing, pulling, etc.) of the parts for which the tool holes are provided.

In some embodiments, a first tool hole 208 may be opened on the first structural component 200. In some embodiments, as shown in FIG. 9, the first tool hole 208 may be opened on the third retaining ring portion 2049.

In some embodiments, as shown in FIG. 12 and FIG. 13, a second tool hole 503 may be opened on the second nut 501.

In some embodiments, a third tool hole may be provided on the first nut 801, the third tool hole is not shown in the drawings and reference may be made to the first tool hole 208 and the second tool hole 503. In some embodiments, the first nut 801 may be hexagonal or have other shapes.

Technical effects that may be realized by the foregoing embodiments include, but are not limited to, that by providing the tool holes on components, installation and/or removal can be realized very easily and quickly.

Beneficial effects that may be brought about by the sealing structure of the embodiments of the present disclosure include, but are not limited to: (1) that the sealing assembly of the present disclosure can seal the gap between the baffle plate and the first structural component and the gap between the component to be sealed and the first structural component, which can provide a better sealing effect; (2) that the sealing structure can seal from both sides of the baffle plate at the same time to enhance the sealing effect; (3) connections among the structures in the sealing structure are simple and convenient, and the sealing components can be quickly installed and replaced as well as flexibly adjusted, which can reduce the difficulty and cost of maintenance and repair; (4) that the use of the insulating material for the sealing components and the structural components can improve the safety performance. It should be noted that the beneficial effects that may be produced by different embodiments are different, and the beneficial effects that may be produced in different embodiments may be any one or a combination of any one or a combination of any of the foregoing, or any other beneficial effect that may be obtained.

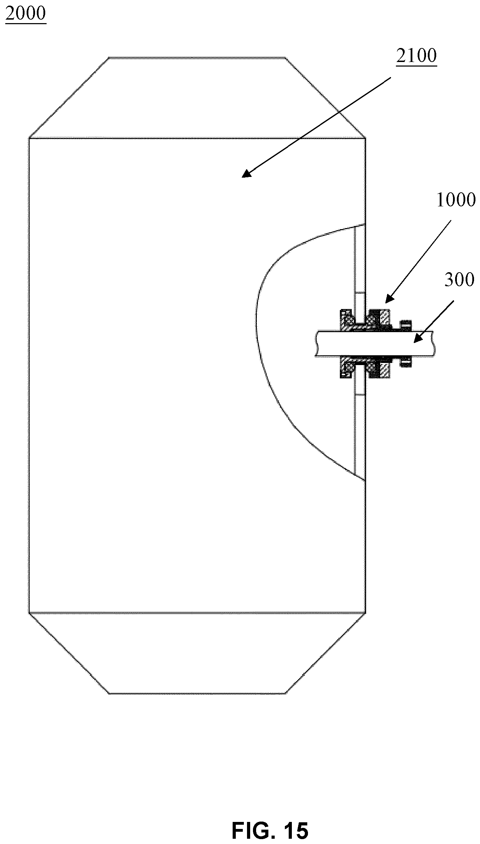

FIG. 15 is a schematic diagram illustrating an exemplary structure of a vacuum furnace according to some embodiments of the present disclosure. The vacuum furnace is described in detail below in conjunction with FIG. 15. As shown in FIG. 15, a vacuum furnace 2000 includes the sealing structure 1000 and a furnace body 2100. The furnace body 2100 is a furnace body that may be used to provide a vacuum environment. In some embodiments, the baffle plate 100 may be a part of a side wall of the furnace body 2100, that is, the baffle plate 100 may be an integral structure with the side wall of the furnace body 2100. In other embodiments, an opening may be provided on the side wall of the furnace body 2100 before the baffle plate 100 is installed at the opening. That is, the baffle plate 100 is structured separately from the side wall of the furnace body 2100.

In some embodiments, the first side surface 101 of the baffle plate 100 is disposed within the furnace body 2100, and the second side surface 102 of the baffle plate 100 is disposed outside the furnace body 2100. With this setup, it is easy to install, remove, overhaul, replace, and so on, from the outside of the vacuum furnace. For example, in a process of installing the first nut 801 and/or the second nut 501, since the first nut 801 and the second nut 501 are both disposed on the side where the second side surface 102 of the baffle plate 100 is located, the first nut 801 and/or the second nut 501 may be easily installed from the outside of the furnace body 2100.

In some embodiments, the furnace body 2100 may include a plurality of openings. For example, there may be two openings on the furnace body 2100, and the two openings are used for threading coils and cables in and out, respectively. Each of the two openings may be provided with the sealing structure 1000 as described above.

The basic concepts have been described above, and it is apparent to those skilled in the art that the foregoing detailed disclosure serves only as an example and does not constitute a limitation of the present disclosure. While not expressly stated herein, a person skilled in the art may make various modifications, improvements, and amendments to the present disclosure. Those types of modifications, improvements, and amendments are suggested in the present disclosure, so those types of modifications, improvements, and amendments remain within the spirit and scope of the exemplary embodiments of the present disclosure.

Also, the present disclosure uses specific words to describe embodiments of the present disclosure. Words such as "an embodiment", "one embodiment", and/or "some embodiments" mean a feature, structure, or characteristic associated with at least one embodiment of the present disclosure. Accordingly, it should be emphasized and noted that "an embodiment" "one embodiment", or "an alternative embodiment" in different places in the present disclosure do not necessarily refer to the same embodiment. In addition, certain features, structures, or characteristics of one or more embodiments of the present disclosure may be suitably combined.

Similarly, it should be noted that to simplify the presentation of the disclosure of the present disclosure, and thereby aid in the understanding of one or more embodiments of the invention, the foregoing descriptions of embodiments of the present disclosure sometimes group multiple features together in a single embodiment, accompanying drawings, or in a description thereof. However, this method of disclosure does not imply that more features are required for the objects of the present disclosure than are mentioned in the claims. Rather, claimed subject matter may lie in less than all features of a single foregoing disclosed embodiment.

Finally, it should be understood that the embodiments described in the present disclosure are only used to illustrate the principles of the embodiments of the present disclosure. Other deformations may also fall within the scope of the present disclosure. As such, alternative configurations of embodiments of the present disclosure may be viewed as consistent with the teachings of the present disclosure as an example, not as a limitation.
Correspondingly, the embodiments of the present disclosure are not limited to the embodiments expressly presented and described herein.

## Claims

1. A sealing structure, comprising:
a baffle plate provided with a first through-hole, the first through-hole extending through a first side surface and a second side surface of the baffle plate;
a first structural component provided with an internal hole for a component to be sealed to extend through, the first structural component being connected to the baffle plate, wherein at least a part of the internal hole is located within the first through-hole, and at least the part of the internal hole is not parallel to both the first side surface and the second side surface; and
a sealing assembly for sealing a gap between the baffle plate and the first structural component and a gap between the component to be sealed and the first structural component.

2. The sealing structure of claim 1, wherein
the first structural component extends through the baffle plate via the first through-hole; and
the sealing assembly includes a first sealing component for sealing the gap between the component to be sealed and the first structural component, the first sealing component being disposed between an inner wall of the internal hole and the component to be sealed.

3. The sealing structure of claim 2, wherein the sealing assembly includes a second sealing component, wherein the second sealing component is located at one end of the first through-hole and abuts against the first side surface or the second side surface of the baffle plate to seal the gap between the baffle plate and the first structural component.

4. The sealing structure of claim 3, wherein
the sealing assembly further includes a third sealing component for sealing the gap between the baffle plate and the first structural component; and
the second sealing component and the third sealing component are located at two ends of the first through-hole, respectively, and the second sealing component and the third sealing component abut against the first side surface and the second side surface of the baffle plate, respectively.

5. The sealing structure of claim 2, wherein the sealing assembly includes a fourth sealing component for sealing the gap between the baffle plate and the first structural component, at least a part of the fourth sealing component being disposed between an inner wall of the first through-hole and an outer wall of the first structural component.

6. The sealing structure of claim 4, wherein the sealing structure further includes a first limiting structure for limiting a position of the first structural component within the first through-hole.

7. The sealing structure of claim 6, wherein the first limiting structure includes a first nut and a first external thread, the first external thread being disposed on the first structural component, the first nut being threadedly connected to the first external thread of the first structural component on a side where the second side surface of the baffle plate is located.

8. The sealing structure of claim 7, wherein
the sealing structure further includes a second structural component, the second structural component being sleeved on the first structural component and located between the first nut and the third sealing component;
the second structural component includes a first main ring portion and a first retaining ring portion, the first main ring portion being sleeved on the first structural component, and the first retaining ring portion being located at one end of the first main ring portion in an axial direction; and
both the third sealing component and the first retaining ring portion are located between the baffle plate and the first main ring portion, and the third sealing component is located within an inner ring of the first retaining ring portion.

9. The sealing structure of claim 2, wherein
the first structural component includes a first main ring portion and a first retaining ring portion;
the internal hole is formed on the first main ring portion;
the first main ring portion extends through the baffle plate via the first through-hole, the first retaining ring portion is located on a side where the first side surface of the baffle plate is located, and the first retaining ring portion surrounds an outer side of the first main ring portion; and
an outer diameter of the first retaining ring portion is larger than a diameter of the first through-hole.

10. The sealing structure of claim 9, wherein the first structural component further includes a second retaining ring portion, the second retaining ring portion being located on the side where the first side surface of the baffle plate is located, the second retaining ring portion being disposed on a side of the first retaining ring portion facing the baffle plate, and an outer diameter of the second retaining ring portion being larger than the outer diameter of the first main ring portion.

11. The sealing structure of claim 9, wherein a ratio of the outer diameter of the first main ring portion to an inner diameter of the first main ring portion is in a range of 1.1 to 2.

12. The sealing structure of claim 9, wherein a ratio of the diameter of the first through-hole to an inner diameter of the first main ring portion is in a range of 1.2 to 2.5.

13. The sealing structure of claim 2, further comprising a second limiting structure configured to limit the first sealing component within the internal hole.

14. The sealing structure of claim 13, wherein the second limiting structure includes a second nut and a first internal thread, the first internal thread located within the internal hole, and the second nut being connected to the first internal thread of the internal hole on a side where the second side surface of the baffle plate is located.

15. The sealing structure of claim 14, wherein the second limiting structure includes a limiting bump disposed in the internal hole, and the first sealing component is disposed between the limiting bump and the second nut.

16. The sealing structure of claim 14, wherein a first gasket is disposed between the first sealing component and the second nut.

17. The sealing structure of claim 2, wherein the sealing assembly includes at least two first sealing components, and a second gasket is disposed between at least two adjacent first sealing components.

18. The sealing structure of claim 1, wherein
the first structural component extends through the first through-hole from a side where the second side surface of the baffle plate is located;
a limiting stopper is disposed at an end of the first through-hole close to the first side surface;
the component to be sealed extends through the first through-hole and the internal hole; and
the sealing assembly includes a fifth sealing component, the fifth sealing component being disposed in the first through-hole, sleeved on the component to be sealed, and located between the limiting stopper and the first structural component.

19. The sealing structure of claim 18, wherein an outer wall of the first structural component is provided with a second external thread, and an inner wall of the first through-hole is provided with a second internal thread matching the second external thread.

20. The sealing structure of claim 1, wherein the first structural component is made of a conductive material, and an insulating layer is disposed between an outer surface of the first structural component and an inner wall surface of the first through-hole.

21. The sealing structure of claim 1, wherein
the first structural component is made of an insulating material; and/or
the sealing assembly is made of an insulating material.

22. A vacuum furnace, comprising the sealing structure of any one of claims 1 to 21, wherein the vacuum furnace includes a furnace body, an opening is provided on a side wall of the furnace body, and the sealing structure is disposed at the opening through the baffle plate.
